**Europäisches Patentamt**

**European Patent Office**

**Office européen des brevets**

(19)

(11) Veröffentlichungsnummer: **0 048 821**
**A1**

## (12) EUROPÄISCHE PATENTANMELDUNG

(21) Anmeldenummer: 81106670.3

(22) Anmeldetag: **27.08.81**

(51) Int. Cl.³: **G 06 F 7/50**

(30) Priorität: **26.09.80 DE 3036286**

(43) Veröffentlichungstag der Anmeldung: **07.04.82**
**Patentblatt 82/14**

(84) Benannte Vertragsstaaten: **DE FR GB IT NL**

(71) Anmelder: **Deutsche ITT Industries GmbH,**
**Hans-Bunte-Strasse 19 Postfach 840, D-7800 Freiburg**
**(DE)**

(84) Benannte Vertragsstaaten: **DE**

(71) Anmelder: **ITT INDUSTRIES, INC., 320 Park Avenue, New**
**York, NY 10022 (US)**

(84) Benannte Vertragsstaaten: **FR GB IT NL**

(72) Erfinder: **Uhlenhoff, Arnold, Dipl.-Ing.,**
**Hölderlinstrasse 33, D-7830 Emmendingen (DE)**
Erfinder: **Backes, Reiner, Dipl.-Ing., Kehler Strasse 42,**
**D-7800 Freiburg (DE)**

(74) Vertreter: **Stutzer, Gerhard, Dr., Deutsche ITT Industries**
**GmbH Patent- und Lizenzabteilung**
**Hans-Bunte-Strasse 19 Postfach 840, D-7800 Freiburg**
**(DE)**

(54) **Binärer MOS-Ripple-Carry-Volladdierer.**

(57) Er enthält zur Erreichung großer Addiergeschwindigkeit bei Vorliegen der Übertragungssignale nach nur einer Gatterverzögerungszeit pro Stufe ($j = 0...n-1$) eine mit den beiden Stellensignalen Aj, Bj eingangsseitig gespeiste erste UND-Verknüpfung (11j) und eine mit dem Übertragsignal (Ci) der nächstniederen Stufe (i) gespeiste zweite UND-Verknüpfung (22j).

Die beiden UND-Verknüpfungen (11j, 22j) sind jeweils Bestandteil eines ersten Komplexgatters (1j) für die Summenbildung, bzw. eines zweiten Komplexgatters (2j) für die Übertragsbildung. Diese enthalten eine erste bzw. zweite ODER-Verknüpfung (15j, 25j), eine dritte bzw. vierte UND-Verknüpfung (13j, 24j) und eine erste bzw. zweite NOR-Verknüpfung (16j, 26j), an deren jeweiligem Ausgang das invertierte Summen- bzw. invertierte Übertragungssignal (Sj, Cj) auftritt. Die jeweils drei Eingänge der ersten UND- und der ersten ODER-Verknüpfung (11j, 15j) sind mit den beiden Stellensignalen (Aj, Bj) und dem Übertragsignal (Ci) der nächstniederen Stufe (i) gespeist, während die jeweils zwei Eingänge der zweiten UND- und der zweiten ODER-Verknüpfung (22j, 25j) mit den Stellensignalen (Aj, Bj) gespeist sind. Die beiden Eingänge der dritten UND-Verknüpfung (13j) sind mit dem Ausgang der ersten ODER-Verknüpfung (15j) bzw. mit dem Ausgang des zweiten Komplexgatters (2j) verbunden, während die beiden Eingänge der vierten UND-Verknüpfung (24j) mit dem Ausgang der zweiten ODER-Verknüpfung (25j) verbunden bzw. mit dem Übertragsignal (Ci) der nächstniederen Stufe (i) gespeist sind.

Der Ausgang der ersten und der der dritten bzw. der der zweiten und der der vierten UND-Verknüpfung (11j, 13j; 22j, 24j) liegt jeweils am einen der beiden Eingänge der ersten bzw. der zweiten NOR-Verknüpfung (16j, 26j).

In der niedersten Stufe (0) entfallen der Übertragseingang der ersten NOR-Verknüpfung (150), das erste Komplexgatter (10) besteht nur aus der ersten NOR-Verknüpfung (51) und einer NAND-Verknüpfung (160), und das zweite Komplexgatter (20) ist ein NAND-Gatter. In zwei aufeinanderfolgenden Stufen (i, j) sind abwechselnd die Stellensignale und das Übertragsignal der nächstniederen Stufe (i) direkt bzw. invertiert anzulegen.

Als Lastwiderstände (L1i, L2i) der beiden Komplexgatter (1i, 2i) können wiederstandsgeschaltete Verarmungstyp-Transistoren dienen.

A.Uhlenhoff et al 3-2                                    Fl 1057 EP
                                                         Mo/bk
                                                         24. August 1981

## Binärer MOS-Ripple-Carry-Volladdierer

Die Erfindung betrifft binäre MOS-Ripple-Carry-Paralleladdierer entsprechend dem Oberbegriff des Anspruchs 1. In dem Buch von U.Tietze et al "Halbleiter-Schaltungstechnik", 4. Auflage, Berlin 1978, Seiten 472 bis 474 sind die Grundprinzipien derartiger Addierer anhand von logischen Schaltbildern beschrieben. Wie die dortige Abbildung 19.35 zeigt, werden die beiden Stellensignale dabei einem UND-Glied und einem Antivalenz-Glied zugeführt, das Ausgangssignal des Antivalenzglieds zusammen mit dem Übertragsignal der nächstniederen Stufe einem weiteren UND-Glied sowie einem weiteren Antivalenz-Glied zugeführt und die Ausgangssignale der beiden UND-Glieder schließlich noch einem ODER-Glied zugeführt, an dessen Ausgang das Übertragsignal entsteht, während am Ausgang des weiteren Antivalenz-Glied das Summensignal abgenommen werden kann. Diese Anordnung wird auch als Volladddierer im Gegensatz zum sogenannten Halbaddierer bezeichnet, bei dem der Eingang für den Übertrag aus der nächstniederen Stufe fehlt und der somit einen einfacheren Aufbau entsprechend Abb. 19.34 auf Seite 473 a.a.O. hat.

Derartige Volladdierer können zu einem Paralleladdierer zusammengeschaltet werden, wenn sie bezüglich der Übertragsignale in Reihe geschaltet werden. Nach dem Buch von A.Shah et al "Integrierte Schaltungen in digitalen Systemen", Band 2, Basel 1977, Seiten 92 und 93 werden derartige Paralleladdierer als solche mit durchgeschlungenem Übertrag (im Englischen "Ripple Carry") bezeichnet.

Während das erstgenannte Buch keinerlei Schaltungen für die konkrete Realisierung in einer bestimmten Schaltkreistechnik angibt, werden auf den Seiten 87 bis 103* Hinweise auf im Handel befindliche integrierte Bipolarschaltungen für Addierer gegeben. * des zweitgenannten

Eine direkte Übertragung der anhand von integrierten Bipolarschaltungen erläuterten Grundprinzipien der bekannten Paralleladdierer mit Durchschlingung der Übertragsignale auf mittels Isolierschicht-Feldeffekttransistoren zu integrierende Schaltungen, also auf die sogenannten MOS-Schaltungen, ist nicht ohne weiteres möglich, da die MOS-Schaltungstechnik zum Teil erheblich von der Bipolar-Schaltungstechnik abweicht.

Es ist daher die Aufgabe der Erfindung, ausgehend von dem eingangs erwähnten Stand der Technik, einen nach dem Prinzip der Durchschlingung des Übertrags (Ripple Carry) arbeitenden Paralleladdierer zur Realisierung in MOS-Technik anzugeben, wobei im Gegensatz zu der eingangs erwähnten bekannten Prinzipschaltung, in der für das Summensignal mindestens zwei Gatter hintereinandergeschaltet sind und somit deren Gatterlaufzeit als Schaltverzögerung auftritt und für die Bildung des Übertragssignals mindestens drei Gatter in Reihe liegen, insgesamt nur zwei Gatter (für Summe bzw. Übertrag) erforderlich sind und außerdem die Übertragsbildung schon nach der durch die Laufzeit eines Gatters bedingten Verzögerung auftritt; es soll also ein möglichst schneller MOS-Paralleladdierer mit Durchschlingung des Übertrags vorgeschlagen werden.

Diese Aufgabe wird mit den Mitteln des Anspruchs 1 gelöst; eine vorteilhafte Ausgestaltung ist im Anspruch 2 gekennzeichnet. Die Erfindung wird

A.Uhlenhoff et al 3-2                          Fl 1057 EP

nun anhand der Figuren der Zeichnung näher erläutert.

Fig. 1    zeigt das logische Schaltbild eines Ausführungsbeispiels der Erfindung, wobei von den n Stufen
          die Stufe 0, die die Stellensignale mit der
          niedersten Wertigkeit $2^0$ verarbeitet, sowie die
          aufeinanderfolgenden Stufen i, j gezeigt sind,

Fig. 2    zeigt das transistorisierte Schaltbild einer
          Stufe der Anordnung nach Fig. 1 und

Fig. 3    zeigt das transistorisierte Schaltbild der niedersten Stufe 0.

Für das Ausführungsbeispiel ist vorausgesetzt, daß die
Binärsignale in positiver Logik verarbeitet werden. Ferner
ist die Darstellung in den Figuren mittels der Schaltsymbole der Verknüpfungsglieder so gewählt, daß nur solche
Verknüpfungsglieder einen eigenen Arbeitswiderstand aufweisen,deren Ausgangsleitung am Berührungspunkt mit dem
Halbkreis des Verknüpfungssymbols den zur Darstellung
einer Invertierung üblichen Punkt aufweisen. Aus diesem
Grund wird für die Zwecke der vorliegenden Beschreibung
auch zwischen einem Verknüpfungsglied, das eine derartige
Schaltung mit einem einzigen Arbeitswiderstand ist, und
einer Verknüpfung als solcher unterschieden, die  lediglich
Teil eines Verknüpfungsglieds ist und keinen gesonderten
Arbeitswiderstand aufweist. Bei Realisierung der eingangs
erwähnten Prinzipschaltungen mittels handelsüblicher integrierter Bipolarschaltungen ist dies gerade nicht so, denn
diese Schaltungen haben pro Verknüpfungsglied jeweils
einen eigenen Arbeitswiderstand.

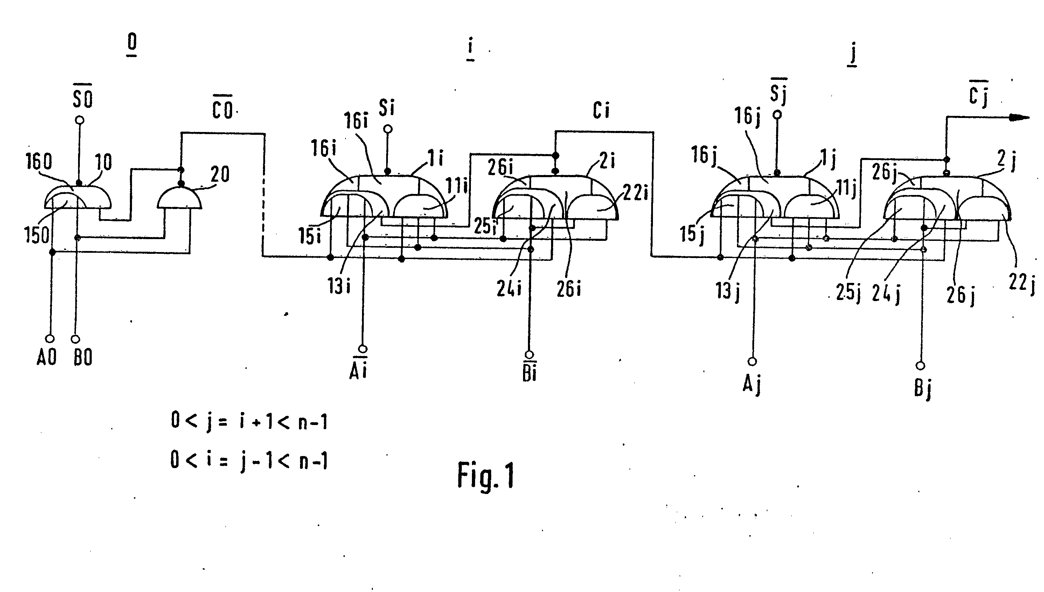

In Fig. 1 besteht die Stufe j aus dem ersten und dem
zweiten Komplexgatter 1j, 2j, ebenso die Stufe i aus den

A.Uhlenhoff et al 3-2 . Fl 1057 EP

beiden Komplexgattern 1i, 2i, während die Stufe 0 entsprechende Gatter 10, 20 aufweist, die im einzelnen unten
noch näher erläutert werden.

Das erste Komplexgatter 1j besteht aus der ersten UND-
Verknüpfung 11j, entsprechend das zweite Komplexgatter 2j
aus der zweiten UND-Verknüpfung 22j, ferner aus der
ersten ODER-Verknüpfung 15j, bzw. der zweiten ODER-Verknüpfung 25j, aus der dritten UND-Verknüpfung 13j bzw.
der vierten UND-Verknüpfung 24j und aus der ersten NOR-
Verknüpfung 16j, bzw. der zweiten NOR-Verknüpfung 26j.
Gleiches gilt auch für den Aufbau der beiden Komplexgatter
1i, 2i in der Stufe i, wobei dann die einzelnen Verknüpfungen anstatt des Index j den Index i haben. Im ersten
Komplexgatter 1j haben die erste UND-Verknüpfung 11j
und die erste ODER-Verknüpfung 15j jeweils drei Eingänge,
denen die beiden Stellensignale Aj, Bj und das Übertragsignal Ci der nächstniederen Stufe i zugeführt sind. Im
zweiten Komplexgatter 2j haben die zweite UND-Verknüpfung
22j und die zweite ODER-Verknüpfung 25j jeweils zwei
Eingänge, die mit den Stellensignalen Aj, Bj gespeist
sind.

Im ersten Komplexgatter 1j hat die dritte UND-Verknüpfung
13j zwei Eingänge, deren einer mit dem Ausgang der ersten
ODER-Verknüpfung 15j und deren anderer mit dem Ausgang des
zweiten Komplexgatters 2j verbunden ist. Im zweiten Komplexgatter 2j hat die vierte UND-Verknüpfung 24j zwei Eingänge, deren einer mit dem Ausgang der zweiten ODER-Verknüpfung 25j verbunden ist und deren anderem das Übertragssignal Ci der nächstniederen Stufe i zugeführt ist.

Im ersten Komplexgatter 1j ist der Ausgang der ersten und
der der dritten UND-Verknüpfung 11j, 13j mit jeweils einem

A.Uhlenhoff et al 3-2 Fl 1057 EP

der beiden Eingänge der ersten NOR-Verknüpfung 16j verbunden, während im zweiten Komplexgatter 2j der Ausgang der zweiten und der der vierten UND-Verknüpfung 22j, 24j jeweils an einem der beiden Eingänge der zweiten NOR-Verknüpfung 26j liegt.

In der Stufe j entsteht am Ausgang des ersten Komplexgatters 1j das invertierte Summensignal $\overline{Sj}$ und am Ausgang des zweiten Komplexgatters 2j das invertierte Übertragsignal $\overline{Cj}$. Dies ist eine Grundeigenschaft der Erfindung, d.h. in jeder Stufe entsteht am entsprechenden Summenausgang bzw. Übertragsausgang das bezüglich der Eingangs-, also Stellensignale invertierte Signal. Aus diesem Grund ist nach einem weiteren Merkmal der Erfindung in Fig. 1 die zur Stufe j nächstniedere Stufe i eine solche, in der an den Eingängen invertierte Stellensignale und ein invertiertes Übertragsignal anzulegen sind, so daß am Summenausgang und am Übertragsausgang das nichtinvertierte Summensignal Si und das nichtinvertierte Übertragsignal Ci entsteht. In aufeinanderfolgenden Stufen sind also Übertragsausgang der vorangehenden mit dem Übertragseingang der folgenden Stufe direkt zu verbinden, während der vorangehenden Stufe die Stellensignale (oder die invertierten Stellensignale) und dann der darauf folgenden Stufe die invertierten (oder die nichtinvertierten) Stellensignale zuzuführen sind.

Die niederste Stufe 0, die die niederstwertigen Stellensignale A0 bzw. B0 zu addieren hat, braucht, da sie keinen Übertrag zu verarbeiten hat, lediglich als Halbaddierer aufgebaut zu sein. Aus diesem Grund entfällt der Übertragseingang der ersten NOR-Verknüpfung 150. Ferner besteht das erste Komplexgatter 10 nur aus der ersten NOR-Verknüpfung 150 und der NAND-Verknüpfung 160, während das zweite Komplexgatter 20 zu einem NAND-Gatter geworden
ist.

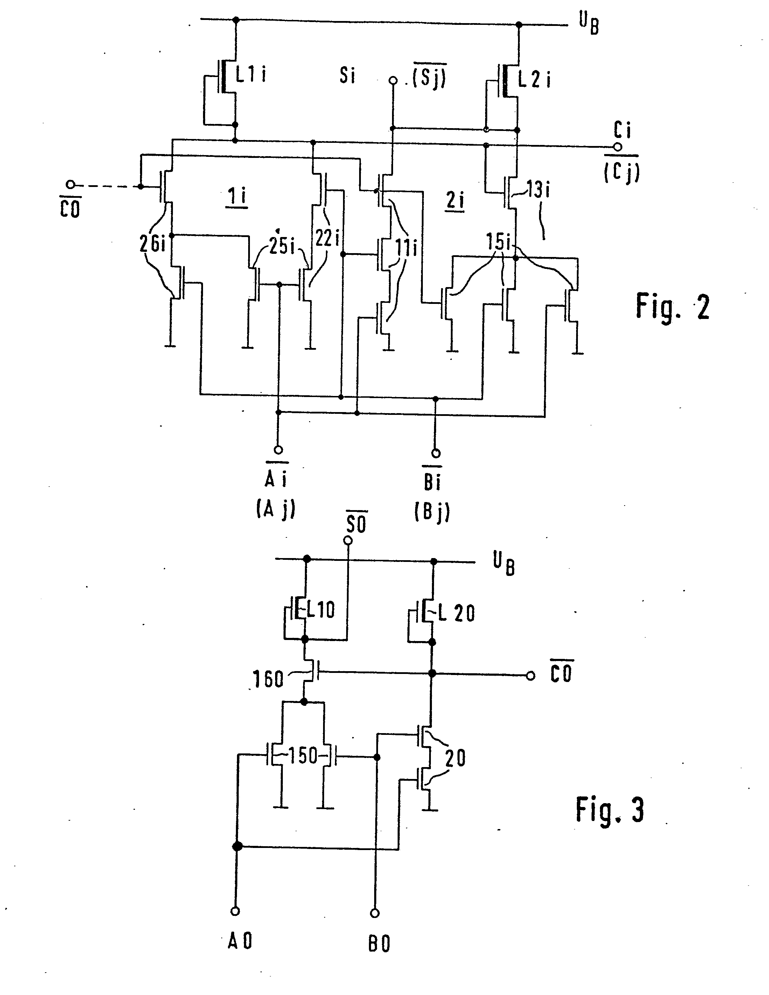

In Fig. 2ist das transistorisierte Schaltbild einer Stufe
in Form eines Ausführungsbeispiels gezeigt. Dabei realisieren mit ihren gesteuerten Strompfaden in Serie geschaltete Transistoren eine UND-Verknüpfung  und mit ihren
gesteuerten Strompfaden parallelgeschaltete Transistoren
eine ODER-Verknüpfung. In Fig. 2 sind die einzelnen
Transistoren der Einfachheit halber nicht mit unterscheidenden Bezugszeichen versehen, sondern es sind die Verknüpfungs-Bezugszeichen aus Fig. 1 mit entsprechenden Hinweislinien angegeben.

Jedes der beiden derart aufgebauten Komplexgatter arbeitet
auf den entsprechenden Lastwiderstand L1i, L2i, der im
Ausführungsbeispiel der Fig. 2 als widerstandsgeschalteter
Transistor vom Verarmungstyp gezeichnet ist. Diese Ausführung ist jedoch nicht zwingend, genausogut kann auch ein
als Widerstand geschalteter Anreicherungstyp-Transistor
eingesetzt werden, oder es können auch getaktete Lastwiderstände ggf. verwendet werden. Über die beiden Lastwiderstände L1i, L2i liegt die Stufe an der Betriebsspannung $U_B$.

Fig. 3 zeigt das entsprechende transistorisierte Schaltbild des Halbaddierers der Stufe 0 von Fig. 1 mit den
Lastwiderständen L10, L20.

Die Anordnung nach der Erfindung weist somit pro Stufe
lediglich zwei jeweils auf einen Lastwiderstand arbeitende
Komplexgatter auf. Für die Übertragsbildung ergibt sich
somit lediglich die Laufzeit eines Gatters, so daß auch bei
Parallelschaltung von vielen Stufen eine optimale Geschwindigkeit  erreicht wird.

A.Uhlenhoff et al 3-2          Fl 1057   EP

Die Anordnung der einzelnen Verknüpfungsglieder ist bei
der Erfindung ferner so vorgenommen, daß der Übertragsausgang einer Stufe vom Übertragseingang der nächsten
Stufe kapazitiv so wenig wie möglich belastet wird, d.h.
lediglich mit den Eingangskapazitäten von drei Verknüpfungsglied-Eingängen, vgl. in Fig. 2 den jeweils einen
Transistor für die Verknüpfungen 26i, 11i, 15i.

A.Uhlenhoff et al 3-2

Fl 1057  EP
Mo/bk
24. August 1981

Patentansprüche

1. Monolithisch mittels Isolierschicht-Feldeffektttransistoren gleicher Leitungsart (N oder P-Kanal)vom Anreicherungstyp integrierter n stufiger Paralleladdierer für zwei im natürlichen Binärcode mit n Stellen dargestellte Zahlen mit Durchschlingung der Übertragsignale (C0,Ci,Cj) (binärer MOS-Ripple-Carry-Paralleladdierer), der pro Stufe (j = 0...n-1) eine mit den beiden Stellensignalen Aj, Bj eingangsseitig gespeiste erste UND-Verknüpfung (11j) und eine mit dem Übertragsignal (Ci) der nächstniederen Stufe (i) gespeiste zweite UND-Verknüpfung (22j) enthält, <u>gekennzeichnet durch folgende Merkmale je Stufe (j):</u>

- die erste UND-Verknüpfung (11j) ist Bestandteil eines ersten Komplexgatters (1j) für die Summenbildung,

- die zweite UND-Verknüpfung (22j) ist Bestandteil eines zweiten Komplexgatters (2j) für die Übertragsbildung,

- beide Komplexgatter (1j, 2j) enthalten ferner je eine ODER-Verknüpfung (erste bzw. zweite ODER-Verknüpfung (15j, 25j)), eine weitere UND-Verknüpfung (dritte bzw. vierte UND-Verknüpfung (13j, 24j)) und eine NOR-Verknüpfung (erste bzw. zweite NOR-Verknüpfung (16j, 26j)), an deren jeweiligem Ausgang das invertierte Summen- bzw. invertierte Übertragsignal ($\overline{Sj}$, $\overline{Cj}$) auftritt,

- die erste UND- und die erste ODER-Verknüpfung (11j, 15j) haben je drei Eingänge, die mit den beiden Stellensignalen (Aj, Bj) und dem Übertragsignal (Ci)

A.Uhlenhoff et al 3-2                                    Fl 1057 EP

der nächstniederen Stufe (i) gespeist sind,

- die zweite UND- und die zweite ODER-Verknüpfung (22j, 25j) haben je zwei Eingänge, die mit den Stellensignalen (Aj, Bj) gespeist sind,

- die beiden Eingänge der dritten UND-Verknüpfung (13j) sind mit dem Ausgang der ersten ODER-Verknüpfung (15j) bzw. mit dem Ausgang des zweiten Komplexgatters (2j) verbunden,

- die beiden Eingänge der vierten UND-Verknüpfung (24j) sind mit dem Ausgang der zweiten ODER-Verknüpfung (25j) verbunden bzw. mit dem Übertragsignal (Ci) der nächstniederen Stufe (i) gespeist,

- der Ausgang der ersten und der der dritten bzw. der der zweiten und der der vierten UND-Verknüpfung (11j, 13j; 22j, 24j) liegt jeweils am einen der beiden Eingänge der ersten bzw. der zweiten NOR-Verknüpfung (16j, 26j),

  ferner gekennzeichnet durch die Merkmale:

- in der niedersten Stufe (0) entfallen der Übertragseingang der ersten NOR-Verknüpfung (150), das erste Komplexgatter (10) besteht nur aus der ersten NOR-Verknüpfung (51) und einer NAND-Verknüpfung (160) und das zweite Komplexgatter (20) ist ein NAND-Gatter, und

- in zwei aufeinanderfolgenden Stufen (i,j) sind abwechselnd die Stellensignale                und das Übertragsignal        der nächstniederen Stufe (i) direkt bzw. invertiert anzulegen.


2. Volladdierer nach Anspruch 1, dadurch gekennzeichnet, daß als Lastwiderstände (L1i, L2i) des ersten bzw. des zweiten Komplexgatters (1i, 2i) widerstandsgeschaltete Verarmungstyp-Transistoren dienen.

Fig.1

1/2

0048821
Fl 1057 EP

$0 < j = i+1 < n-1$

$0 < i = j-1 < n-1$

0048821
F1 1057 EP

Fig. 2

Fig. 3

Europäisches
Patentamt

**EUROPÄISCHER RECHERCHENBERICHT**

0048821

Nummer der Anmeldung

EP 81 10 6670

## EINSCHLÄGIGE DOKUMENTE

| | KLASSIFIKATION DER ANMELDUNG (Int. Cl.³) |
|---|---|

| Kategorie | Kennzeichnung des Dokuments mit Angabe, soweit erforderlich, der maßgeblichen Teile | betrifft Anspruch | |
|---|---|---|---|
| | SIEMENS FORSCHUNGS- UND ENTWICK-LUNGSBERICHTE, Band 5, Nr. 6, Dezember 1976 Berlin, DE EICHRODT: "Rewarding application of transmission gates in MOS-LSI circuits", Seiten 324-326.<br><br>* Figur 2b: Seite 324, rechte Spalte, letzter Absatz *<br><br>-- | 1 | G 06 F 7/50 |
| A | IBM TECHNICAL DISCLOSURE BULLETIN, vol. 18, no. 9, Feburar 1976, Armonk, US VARADARAJAN: "Full binary adder employing fewer components", Seite 2880.<br><br>----- | 1 | **RECHERCHIERTE SACHGEBIETE** (Int. Cl.³)<br><br>G 06 F 7/50 |

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-12-1981 | FORLEN |